# EUROPEAN PATENT SPECIFICATION

(11) **EP 2 658 209 B1**
(45) Date of publication and mention of the grant of the patent: **11.03.2020**
(21) Application number: 13160538.8
(22) Date of filing: 22.03.2013
(51) Int. Cl.: H04L 29/06

(54) **METHODS AND APPARATUS FOR STREAMING AUDIO CONTENT**
VERFAHREN UND VORRICHTUNG ZUM STREAMEN VON AUDIO-INHALT
PROCÉDÉS ET APPAREIL DE DIFFUSION DE CONTENU AUDIO

(30) Priority: 27.04.2012 US 201213458747
(43) Date of publication of application: 30.10.2013
(73) Proprietor: The Boeing Company, Chicago, IL 60606-1596 (US)
(72) Inventor: Jarvis, George Allen, Berkeley, MO Missouri 63134-0000 (US)
(74) Representative: Witte, Weller & Partner Patentanwälte mbB

(56) References cited:
- WO-A1-2010/120855
- US-A1- 2004 170 159
- US-A1- 2005 286 546
- US-A1- 2009 252 481
- US-B1- 8 128 503

## Description

### BACKGROUND

The present disclosure relates generally to streaming live audio content, and more specifically, to streaming live audio content to a plurality of personal recording devices.

People attend a variety of different types of events (e.g., rock concerts, symphonies, plays, and the like) in a variety of different settings, many of which provide less than optimal listening conditions. In some situations, the listening conditions are adversely affected by the size of the venue. For example, a sheer size of such venues often result in sub-optimal acoustic conditions as it is virtually impossible to optimize the acoustics both for listeners seated close to performers and those seated at a great distance from the performers. In other situations, a setting itself may contribute to the poor sound quality experienced by a listener. For example, a concert held in a park is unlikely to offer the listener a same musical experience as a concert held in a symphony hall since the latter provides carefully controlled acoustics which cannot be achieved in an outdoor setting.

An inability to reach optimal listening conditions is further magnified in situations where an attendee desires to record the event using a video recording device. While a video of the event may be clearly captured, audio associated with the event may adversely be affected by the size of the venue, the setting of the venue, noises from the audience, and a quality of an embedded microphone in the video recording device. US2009/0252481 A1 is titled "Methods, Apparatus, System and Computer Program Product for Audio Input at Video Recording". US2004/0170159 A1 is titled "Digital Audio and/or Video Streaming System".

### SUMMARY

The invention is defined in independent method claim 6 and in independent apparatus claim 1 related to an arrangement comprising an audio streaming device for providing live audio content to a plurality of personal recording devices at a live event, a soundboard enabling an operator to make adjustments to the audio signal, and a plurality of microphones. In the arrangement aspect, an audio streaming device for providing live audio content to a plurality of personal recording devices is provided. The audio streaming device includes one or more processors programmed to establish a network connection with at least one of the plurality of personal recording devices, receive live audio content from an audio capturing device, and stream the live audio content to the plurality of personal recording devices.

The personal recording device may include a means for capturing video images of an event, a memory area, and a processor. The processor may be programmed to establish a network connection with an audio streaming device, receive a stream of live audio of the event from the audio streaming device, receive live video images of the event, synchronize the received stream of live audio with received live video images, and store the synchronized stream of live audio and live video images in the memory.

Advantageously, receiving the stream of live audio of the event includes receiving a packetized live audio stream of the event, wherein each packet comprises time synchronization data. Preferably, synchronizing the received stream of live audio with the received live video images includes stitching the packetized live audio stream with the live video images based on the synchronization data in each packet. Preferably, the synchronization data includes a timestamp. Preferably, the processor is further programmed to receive heartbeat signals from the audio streaming device and stitch the packetized live audio stream with the live video images further based on the received heartbeat signals.

Advantageously, establishing a network connection with an audio streaming device includes sending a request to receive a stream of live audio of the event from the audio streaming device, and providing authorization information to receive a stream of live audio of the event from the audio streaming device.

Advantageously, the personal recording device further includes a microphone, and the processor is further programmed to disable the microphone prior to establishing a network connection with the audio streaming device.

In yet another aspect, a method for streaming live audio content from an audio streaming device to a plurality of personal recording devices is provided. The method includes establishing a network connection between the audio streaming device and at least one of the plurality of personal recording devices, receiving, by the audio streaming device, live audio of an event, and streaming the live audio of the event from the audio streaming device to the at least one of the plurality of personal recording devices.

### BRIEF DESCRIPTION OF THE DRAWINGS

The present disclosure is described in detail below with reference to the attached drawing figures.
Figure 1 is an exemplary block diagram of a system for streaming live audio from an audio streaming device to a plurality of personal recording devices.
Figure 2 is an exemplary flow chart illustrating a process for streaming live audio from an audio streaming device to a plurality of personal recording devices.

### DETAILED DESCRIPTION

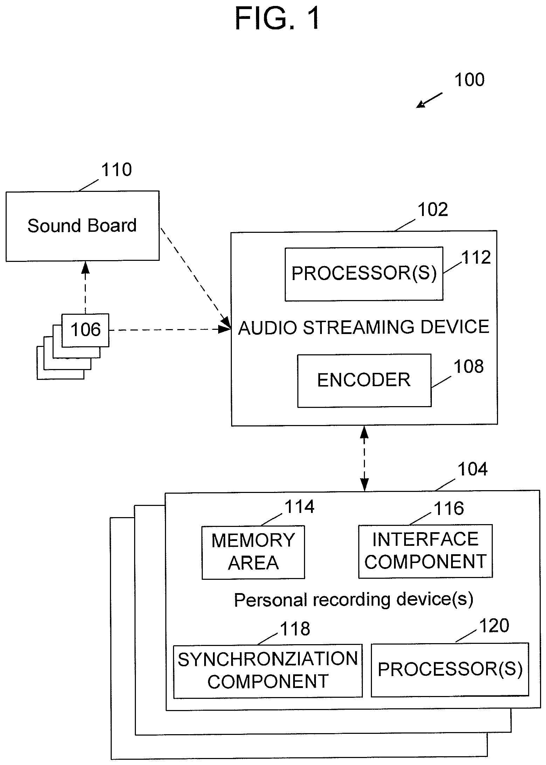

FIG. 1 illustrates a block diagram of a system 100 for streaming live audio from an audio streaming device 102 to a plurality of personal recording devices 104, for example, an audio recording device or a recording device that combines a video camera and an audio recorder into one unit. Among other functions that are discussed more fully herein, system 100 enables an attendee of a live event (or another person able to receive the required signals) to receive a live audio stream of the live event. System 100 can be used at various types of live events. Examples of live events at which system 100 may be used include concerts, sporting events, speeches, plays, operas, dance shows, and recitals. However, the present disclosure is not limited to use for these types of live events and could be used with any type of live event. Further, the term audio stream is meant to refer broadly to any analog or digital audio representation. Thus, one of ordinary skill in the art guided by the teachings herein will appreciate that the term audio stream is not limited to any particular type of audio signal.

At a live event, a performer will generally occupy a centrally placed position and an audience will at least partially surround the performer for audio and visual communication. One or more microphones 106, producing one or more real time audio signals, can be used as an audio feed to audio streaming device 102. One of ordinary skill in the art guided by the teachings herein will appreciate that any number of wired or wireless microphones 106 may be used without departing from the scope of the disclosure.

In one embodiment, microphones 106 capture audio from both a performer and an audience response to enable a "live" feel to the recording to be produced. For example, microphones 106 may be placed at various locations around a venue hosting a live event so as to provide multiple points from which audio can be captured during the live event. Thus, using a plurality of microphones 106 at particular locations, audio content may be configured into a monaural, stereo, 5.1 stereo, 7.1 stereo, or other audio format. Further, microphones 106 may capture audio in digital or analog form without departing from the scope of the disclosure. If audio is captured in analog form, it may be converted to digital form inside microphones 106, via an encoder (not shown), which receives an audio signal from microphone 106 and encodes one or more signals for supply to audio streaming device 102, or to a sound board 110, which can be either coupled to audio streaming device 102 or be separate from audio streaming device 102 in close proximity to the live event to enable the operator of sound board 110 to make adjustments to the audio. An output of sound board 110 may be supplied to encoder 108 (discussed in further detail below) or, in the alternative, sound board 110 may include an encoder. Thus, audio signals received from by sound board 110 may be translated to a digital audio signal and then sent to audio streaming device 102.

Audio streaming device 102 may be used to stream live audio received from microphones 106 or from sound board 110 to personal recording devices 104. While embodiments of the disclosure are illustrated and described herein with reference to audio streaming device 102, aspects of the disclosure are operable with any computing device that performs the functionality illustrated and described herein, or its equivalent. For example, embodiments of the disclosure are operable with a laptop, an embedded device, a server, a desktop computing device, and other portable and non-portable computing devices capable of streaming audio.

Audio streaming device 102 may be located in a venue (or elsewhere) and may have wireless networking hardware built into it to provide the streaming of audio in a wireless manner to personal recording devices 104. Alternatively, audio streaming device may be connected to a wireless network or a network that includes both wired and wireless links. Ultimately, audio streamed by audio streaming device 102 may be provided to personal recording devices 104 in a wireless fashion over, for example, IEEE 802.11 or 802.16 standards. Audio streaming device 102 may provide audio from one or more microphones 106 and/or from a sound board 110 in an audio stream to personal recoding devices 104 in a real-time or near real-time fashion. Alternatively, audio is streamed on a time delayed basis or audio streaming device 102 (or other devices) may record the audio streams for later use. Such recordings may also be used to replay all or a portion of the live event to operators of personal recording devices 104. Audio streaming device 102 may provide audio streams to personal recording devices 104 using point-to-point, point-to-multipoint, peer-to-peer, multipoint-to-multipoint communications, or any combination thereof.

In one embodiment, audio streaming device 102 includes encoder 108 and a processor 112. Encoder 108 may be used to translate an analog audio signal into a digital audio signal. Encoder 108 may also be used to translate a digital audio signal in one particular format into a digital audio signal of a different digital audio format for supply to audio streaming device 102 and/or personal recording devices 104.

Processor 112 executes computer-executable instructions for implementing aspects of the disclosure. In some embodiments, processor 112 is transformed into a special purpose microprocessor by executing computer-executable instructions or by otherwise being programmed. For example, processor 112 may be programmed to digitize the live audio content into a digital audio stream and/or perform the operations of the encoder 108. Processor 112 may be programmed with instructions such as illustrated below with respect to audio streaming device 102.

In some embodiments, audio streaming device 102 may have security controls built-in such that audio streaming device 102 controls which personal recording devices 104 are authorized to receive a live audio stream. If personal recording devices include a GPS receiver that indicates a geographic position, then audio streaming device 102 may provide constraints as to the GPS coordinates of particular personal recording devices that are authorized to receive an audio stream of the live event.

Audio streaming device 102 may also control which personal recording devices 104 are capable of receiving audio streams by requiring an operator of personal recording device 104 to input a code (such as, for example, a numeric code) or provide an authorization key assigned to personal recording device 104 in order to obtain authorization to receive streamed audio for that live event. In one embodiment, an owner/user of personal recording device 104 may purchase a code to input into personal recording device 104 to enable personal recording device 104 to receive streamed audio for a particular live event. This code could be purchased at the time tickets for the live event were purchased or otherwise obtained. Alternatively, this code could be obtained at the live event venue. As another example, owners of personal recording devices 104 may subscribe to services that enable them to obtain streamed audio for various live events. Audio streaming device 102 may retain identification numbers (e.g., authorization keys) of such personal recording devices 104 for authorization purposes.

In some embodiments, only attendees of the live event will be permitted to receive streamed audio from audio streaming device 102. In other embodiments, personal recording devices 104 remote from a venue of the live event are permitted to receive streamed audio of the live event from audio streaming device 102. In such embodiments, attendees of the live event, and/or people remote from the live event, may be permitted to receive either live audio, delayed audio, or recorded audio of the live event depending upon, for example, desires of the operator of the venue where the live event is occurring, the promoters of the live event, the operator of the service, and/or the performers of the live event.

Personal recording devices 104 include a memory area 114, an interface component 116, a synchronization component 118, at least one processor 120. While the components are shown to be stored in memory area 114, the components may be stored and executed from a memory area remote from personal recording device 104. For example, although personal recording device 104 is configured to be autonomous, in some embodiments, the components of personal recording device 104 may be stored in a cloud service, a database, or other memory area accessible by personal recording device 104. Such embodiments can reduce the computational and storage burden on computing device 102.

In one embodiment, interface component 116 enables personal recording device 104 to communicate with audio streaming device 102. For example, interface component 116 may open a session with audio streaming device 102 by authenticating personal recording device 104. In some embodiments, audio streaming device 102 may provide an authentication key to personal recording device 104 to enable decoding of audio streams from audio streaming device 102. In other embodiments, a certification or token may be provided to personal recording device 104 to enable personal recording device 104 to request transmission of a live audio stream from audio streaming device 102. In some embodiments, the personal recording device 104 may provide authorization information to receive transmission of the live video stream from audio streaming device 102. However, one of ordinary skill in the art guided by the teachings herein will appreciate that any type of authentication may be used without departing from the scope of the present disclosure.

In embodiments where personal recording device 104 is not merely an audio recording device, but a recording device that combines a video camera and an audio recorder into one unit, once authorization is provided, interface component 116 may instruct an embedded microphone (not shown) of personal recording device 104 to be disabled. In another embodiment, the embedded microphone is disabled prior to establishing a network connection with audio streaming device 102.

In one embodiment, interface component 116 may present a series of options to the user of personal recording device 104. One option may be to select an audio stream for a live event. At some live events, the system may store various prerecorded content on audio streaming device 102. Examples of prerecorded content may include commentary about a performer at the live event and/or interviews with the performer. The user may have the option of selecting this prerecorded content using personal recording device 104. In addition, a live event (e.g., a sporting event) may provide commentary in addition to the audio stream for the live event. As such, a user may select an option that enables the audio streaming device to receive the commentary in addition to the audio stream for the live event.

In one embodiment, synchronization component 118 syncs video of a live event captured by personal recording devices 104 with the received audio content of the live event to enable a video of the event to have proper sound since personal recording devices 104 receive audio content from a separate device (e.g., audio streaming device 102). Audio streamed from audio streaming device 102 may be packetized such that each packet contains synchronization data associating various portions of audio of the event with corresponding portions of video of the event. In one embodiment, the synchronization data may include a heartbeat signal, timestamps, audio frame numbers, or other markers relating each portion of audio. As such, synchronization component 118 may stitch the packetized audio stream with captured video based on the synchronization data. The stitching of the packetized audio stream with captured video may be executed in real time using personal recording device 104, or the packetized audio stream may be saved in memory area 114 separate from the captured video to enable the packetized audio stream and the captured video to be stitched at a later point in time using either the personal recording device 104 or another computing device, such as a personal computer, a hand-held or laptop device, a programmable consumer electronic, a mobile telephone, and the like.

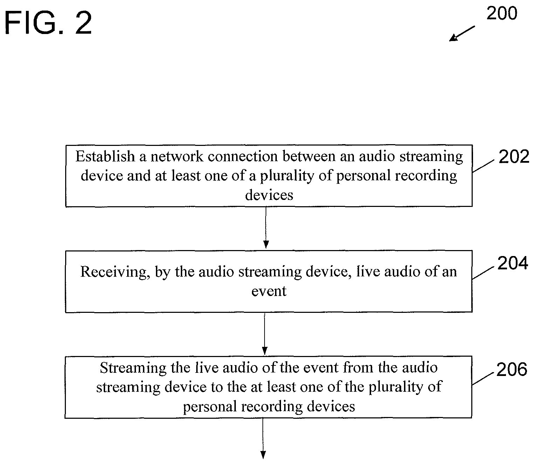

Processor 120 executes computer-executable instructions for implementing aspects of the disclosure. In some embodiments, processor 120 is transformed into a special purpose microprocessor by executing computer-executable instructions or by otherwise being programmed. For example, one or more processors 120 may be programmed with instructions such as illustrated below with respect to Figure 2.

Referring next to Figure 2, an exemplary flow chart of a process 200 for streaming live audio from audio streaming device 102 to personal recording devices 104 is provided. Process 200 begins at 202 where a network connection between audio streaming device 102 and at least one of personal recording devices 104 is established. In one embodiment, a request to receive the live audio content is received by the audio streaming device 102 from the at least one of personal recording devices 104. At this point, audio streaming device 102 may determine whether that at least one of personal recording devices 104 has authority to receive the live audio content. If it is determined that the at least one of personal recording devices 104 has authority to receive the live audio content, audio streaming device 102 authorizes the at least one of personal recording device 104 to receive a stream of the live audio content, and at 204, live audio of an event is receiving by audio streaming device 102. In one embodiment, public and private keys are utilized such that a type of audio content received by personal recording device 104 from audio streaming device 102 is based on a key that corresponds to a media access control address of personal recording device 104 or some other personally identifiable information. At 206, the live audio of the event is streamed from audio streaming device 102 to the at least one of personal recording devices 104. In one embodiment, the live audio received by audio streaming device 102 is packetized into a plurality of audio packets and synchronization data (e.g., time stamps) is embedded into each of the plurality of audio packets prior to streaming the live audio to the at least one personal recording device 104. In one embodiment, audio streaming device 102 sends a heartbeat signal (e.g., 802.11 "beacon" frames, which are typically short management frames about every 100 milliseconds) to personal recording device 104 for synchronization purposes.

### Exemplary Operating Environment

Audio streaming device 102 and personal recording device 104 such as described herein may have one or more processors or processing units, system memory, and some form of computer readable media. By way of example and not limitation, computer readable media comprise computer storage media and communication media. Computer storage media include volatile and nonvolatile, removable and non-removable media implemented in any method or technology for storage of information such as computer readable instructions, data structures, program modules or other data. Communication media typically embody computer readable instructions, data structures, program modules, or other data in a modulated data signal such as a carrier wave or other transport mechanism and include any information delivery media. Combinations of any of the above are also included within the scope of computer readable media.

Audio streaming device 102 and personal recording device 104 may operate in a networked environment using logical connections to one or more remote computers. Although described in connection with an exemplary computing system environment, embodiments of the disclosure are operational with numerous other general purpose or special purpose computing system environments or configurations. The computing system environment is not intended to suggest any limitation as to the scope of use or functionality of any aspect of the disclosure. Moreover, the computing system environment should not be interpreted as having any dependency or requirement relating to any one or combination of components illustrated in the exemplary operating environment. Examples of well known computing systems, environments, and/or configurations that may be suitable for use with aspects of the disclosure include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, quantum computing, and the like.

Embodiments of the disclosure may be described in the general context of computer-executable instructions, such as program modules, executed by one or more computers or other devices. The computer-executable instructions may be organized into one or more computer-executable components or modules. Generally, program modules include, but are not limited to, routines, programs, objects, components, and data structures that perform particular tasks or implement particular abstract data types. Aspects of the disclosure may be implemented with any number and organization of such components or modules. For example, aspects of the disclosure are not limited to the specific computer-executable instructions or the specific components or modules illustrated in the figures and described herein. Other embodiments of the disclosure may include different computer-executable instructions or components having more or less functionality than illustrated and described herein. Aspects of the disclosure may also be practiced in distributed computing environments where tasks are performed by remote processing devices that are linked through a communications network. In a distributed computing environment, program modules may be located in both local and remote computer storage media including memory storage devices.

The order of execution or performance of the operations in embodiments of the disclosure illustrated and described herein is not essential, unless otherwise specified. That is, the operations may be performed in any order, unless otherwise specified, and embodiments of the disclosure may include additional or fewer operations than those disclosed herein. For example, it is contemplated that executing or performing a particular operation before, contemporaneously with, or after another operation is within the scope of aspects of the disclosure.

When introducing elements of aspects of the disclosure or the embodiments thereof, the articles "a," "an," "the," and "said" are intended to mean that there are one or more of the elements. The terms "comprising," "including," and "having" are intended to be inclusive and mean that there may be additional elements other than the listed elements.

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

## Claims

1. Arrangement comprising an audio streaming device (102) for providing live audio content to a plurality of personal recording devices (104) at a live event, a soundboard (110) enabling an operator to make adjustments to audio signals and a plurality of microphones (106),
- the plurality of microphones (106) placed at various locations around a venue hosting the live event,
- the soundboard (110) receiving audio signals from the plurality of microphones (106),
- the audio streaming device (102) comprising one or more processors (112) programmed to:
establish a network connection using respective wireless communication links with the plurality of personal recording devices (104);
receive live audio content from the soundboard (110); and
stream the live audio content in a wireless manner to the plurality of personal recording devices (104).

2. An arrangement in accordance with Claim 1, wherein the one or more processors (112) are further programmed to:
packetize the received live audio content into a plurality of audio packets; and
embed synchronization data into each of the plurality of audio packets.

3. An arrangement in accordance with Claim 1 or 2, wherein establishing a network connection with the plurality of personal recording devices (104) comprises:
receiving, from each of the plurality of personal recording devices (104), respective requests to receive the live audio content;
determining whether the plurality of personal recording devices (104) each have authority to receive the live audio content; and
authorizing the plurality of personal recording devices (104) to receive a stream of the live audio content.

4. An arrangement in accordance with any of Claims 1 to 3, wherein the one or more processors (112) are further programmed to digitize the received live audio content into a digital audio stream; and
wherein streaming the live audio to the plurality of personal recording devices (104) comprises streaming the digital audio stream to the plurality of personal recording devices (104).

5. An arrangement in accordance with any of Claims 1 to 4, wherein the respective wireless communication links are configured to send the live audio stream over 802.11 standard.

6. A method for streaming live audio content from an audio streaming device (102) to a plurality of personal recording devices (104) at a live event, the method comprising:
establishing (202) a network connection using respective wireless communication links between the audio streaming device (102) and the plurality of personal recording devices (104);
receiving (204), by a soundboard (110), live audio of the event from a plurality of microphones (106) placed at various locations around a venue hosting the live event; and
adjusting the live audio received from the plurality of microphones (106),
receiving, by the audio streaming device (108), the adjusted live audio from the soundboard (110); and
streaming (206), by the audio streaming device (108), the adjusted live audio of the event in a wireless manner from the audio streaming device (102) to the plurality of personal recording devices (104).

7. A method in accordance with Claim 6, further comprising:
packetizing the received live audio into a plurality of audio packets; and
embedding synchronization data into each of the plurality of audio packets.

8. A method in accordance with Claim 7, wherein embedding synchronization data into each of the plurality of audio packets comprises time stamping each of the plurality of audio packets.

9. A method in accordance with any of claims Claim 6 to 8, wherein establishing a network connection with the plurality of personal recording devices (104) comprises:
receiving, from the plurality of personal recording devices (104), respective requests to receive the live audio content;
determining whether the plurality of personal recording devices (104) each have authority to receive the live audio content; and
authorizing the plurality of personal recording devices (104) to receive a stream of the live audio content based on the determining.

10. A method in accordance with any of Claims 6 to 9, wherein receiving, by the audio streaming device (102), adjusted live audio of the event comprises receiving adjusted live audio of the event from the plurality of microphones (106) such that combining the adjusted live audio received from each of the plurality of microphones (106) provides surround sound.

11. A method in accordance with any of Claims 6 to 10, wherein the streaming of the adjusted live audio of the event from the audio streaming device (102) to the plurality of personal recording devices (104) is in 802.11 standard.

12. A method in accordance with any of Claims 6 to 11, further comprising sending a heartbeat signal from the audio streaming device (102) to the plurality of personal recording devices (104) for synchronization purposes.

## Patentansprüche

1. Anordnung mit einem Audiostreaming-Gerät (102) zum Bereitstellen von Live-Audioinhalt an eine Vielzahl von persönlichen Aufzeichnungsgeräten (104) bei einer Live-Veranstaltung, mit einem Soundboard (110), das es einer Bedienperson ermöglicht, Einstellungen an Audiosignalen vorzunehmen, und mit einer Vielzahl von Mikrofonen (106),
- wobei die Vielzahl von Mikrofonen (106) an verschiedenen Orten im Bereich bzw. um einen Austragungsort herum angeordnet sind, an dem die Live-Veranstaltung stattfindet,
- wobei das Soundboard (110) Audiosignale von der Vielzahl von Mikrofonen (106) empfängt,
- wobei das Audiostreaming-Gerät (102) einen oder mehrere Prozessoren (112) aufweist, die dazu programmiert sind, um:
eine Netzwerkverbindung unter Verwendung jeweiliger drahtloser Kommunikations-Links mit der Vielzahl von persönlichen Aufzeichnungsgeräten (104) einzurichten;
Live-Audioinhalt von dem Soundboard (110) zu empfangen; und
den Live-Audioinhalt auf eine drahtlose Art und Weise an die Vielzahl von persönlichen Aufzeichnungsgeräten (104) zu streamen.

2. Anordnung nach Anspruch 1, wobei der eine oder die mehreren Prozessoren (112) ferner dazu programmiert sind, um:
den empfangenen Live-Audioinhalt in eine Vielzahl von Audiopaketen zu packen; und
in jedes der Vielzahl von Audiopaketen Synchronisationsdaten einzubetten.

3. Anordnung nach Anspruch 1 oder 2, wobei das Einrichten einer Netzwerkverbindung mit der Vielzahl von persönlichen Aufzeichnungsgeräten (104) beinhaltet:
Empfangen, und zwar von jedem der Vielzahl von persönlichen Aufzeichnungsgeräten (104), von jeweiligen Anforderungen, den Live-Audioinhalt zu empfangen;
Bestimmen, ob die Vielzahl von persönlichen Aufzeichnungsgeräten (104) jeweils Autorität haben, um den Live-Audioinhalt zu empfangen; und
Autorisieren der Vielzahl von persönlichen Aufzeichnungsgeräten (104), um einen Stream des Live-Audioinhalts zu empfangen.

4. Anordnung nach einem beliebigen der Ansprüche 1-3, wobei der eine oder die mehreren Prozessoren (112) ferner dazu programmiert sind, den empfangenen Live-Audioinhalt in einen digitalen Audiostream zu digitalisieren; und
wobei das Streamen des Live-Audioinhalts an die Vielzahl von persönlichen Aufzeichnungsgeräten (104) das Streamen des digitalen Audiostreams an die Vielzahl von persönlichen Aufzeichnungsgeräten (104) beinhaltet.

5. Anordnung nach einem beliebigen der Ansprüche 1-4, wobei die jeweiligen drahtlosen Kommunkations-Links dazu konfiguriert sind, den Live-Audiostream über einen 802.11-Standard zu senden.

6. Verfahren zum Streamen von Live-Audioinhalten von einem Audiostreaming-Gerät (102) an eine Vielzahl von persönlichen Aufzeichnungsgeräten (104) bei einer Live-Veranstaltung, wobei das Verfahren aufweist:
Einrichten (202) einer Netzwerkverbindung unter Verwendung von jeweiligen drahtlosen Kommunikations-Links zwischen dem Audiostreaming-Gerät (102) und der Vielzahl von persönlichen Aufzeichnungsgeräten (104);
Empfangen (204), und zwar mittels eines Soundboards (110), von Live-Audio der Veranstaltung von einer Vielzahl von Mikrofonen (106), die an verschiedenen Orten im Bereich eines Veranstaltungsortes bzw. um einen Veranstaltungsort herum angeordnet sind, an dem die Live-Veranstaltung stattfindet; und
Einstellen des Live-Audios, das von der Vielzahl von Mikrofonen (106) empfangen werden,
Empfangen, und zwar mittels des Audiostreaming-Gerätes (108), des eingestellten Live-Audios von dem Soundboard (110); und
Streamen (206) und zwar mittels des Audiostreaming-Gerätes (108), des eingestellten Live-Audios der Veranstaltung auf eine drahtlose Art und Weise von dem Audiostreaming-Gerät (102) an die Vielzahl von persönlichen Aufzeichnungs-Geräten (104).

7. Verfahren nach Anspruch 6, ferner mit:
Packen des empfangenen Live-Audios in eine Vielzahl von Audio-Paketen; und
Einbetten von Synchronisationsdaten in jedes der Vielzahl von Audio-Paketen.

8. Verfahren nach Anspruch 7, wobei das Einbetten von Synchronisationsdaten in jedes der Vielzahl von Audio-Paketen beinhaltet, jedes der Vielzahl von Audio-Paketen mit einem Zeitstempel zu versehen.

9. Verfahren nach einem beliebigen der Ansprüche 6-8, wobei das Einrichten einer Netzwerkverbindung mit der Vielzahl von persönlichen Aufzeichnungsgeräten (104) beinhaltet:
Empfangen, und zwar von der Vielzahl von persönlichen Aufzeichnungsgeräten (104), von jeweiligen Anforderungen, den Live-Audioinhalt zu empfangen;
Bestimmen, ob die Vielzahl von persönlichen Aufzeichnungsgeräten (104) jeweils die Autorität haben, um den Live-Audioinhalt zu empfangen; und
Autorisieren der Vielzahl von persönlichen Aufzeichnungsgeräten (104), um einen Stream des Live-Audioinhalts zu empfangen, und zwar basierend auf der Bestimmung.

10. Verfahren nach einem beliebigen der Ansprüche 6-9, wobei das Empfangen von eingestelltem Live-Audioinhalt der Veranstaltung mittels des Audiostreaming-Gerätes (102) beinhaltet, eingestellten Live-Audioinhalt der Veranstaltung von der Vielzahl von Mikrofonen (106) derart zu empfangen, dass ein Kombinieren des eingestellten Live-Audioinhalts, der von jedem der Vielzahl von Mikrofonen (106) empfangen wird, einen Surround-Sound bereitstellt.

11. Verfahren nach einem beliebigen der Ansprüche 6-10, wobei das Streamen des eingestellten Live-Audioinhalts der Veranstaltung von dem Audiostreaming-Gerät (102) an die Vielzahl von persönlichen Aufzeichnungsgeräten (104) in einem 802.11-Standard stattfindet.

12. Verfahren nach einem beliebigen der Ansprüche 6-11, ferner mit dem Senden eines Herzschlag-Signals von dem Audiostreaming-Gerät (102) an die Vielzahl von persönlichen Aufzeichnungsgeräten (104) und zwar zum Zwecke der Sychronisierung.

## Revendications

1. Agencement comprenant un dispositif de diffusion audio en continu (102) destiné à fournir un contenu audio en direct à une pluralité de dispositifs d'enregistrement personnels (104) lors d'un événement en direct, une carte son (110) permettant à un opérateur de faire des ajustements sur des signaux audio et une pluralité de microphones (106),
- la pluralité de microphones (106) placés à divers endroits autour d'un lieu accueillant l'événement en direct,
- la carte son (110) recevant des signaux audio à partir de la pluralité de microphones (106),
- le dispositif diffusion audio en continu (102) comprenant un ou plusieurs processeurs (112) programmés pour :
établir une connexion de réseau en utilisant des liaisons de communication sans fil respectives avec la pluralité de dispositifs d'enregistrement personnels (104) ;
recevoir un contenu audio en direct à partir de la carte son (110) ; et
diffuser en continu le contenu audio en direct d'une manière sans fil à la pluralité de dispositifs d'enregistrement personnels (104).

2. Agencement selon la revendication 1, dans lequel les un ou plusieurs processeurs (112) sont en outre programmés pour :
paquétiser le contenu audio en direct reçu dans une pluralité de paquets audio ; et
incorporer des données de synchronisation dans chacun de la pluralité de paquets audio.

3. Agencement selon la revendication 1 ou 2, dans lequel l'établissement d'une connexion de réseau avec la pluralité de dispositifs d'enregistrement personnels (104) comprend de :
recevoir, à partir de chacun de la pluralité de dispositifs d'enregistrement personnels (104), des demandes respectives pour recevoir le contenu audio en direct ;
déterminer si la pluralité de dispositifs d'enregistrement personnels (104) sont chacun habilités à recevoir le contenu audio en direct ; et
autoriser la pluralité de dispositifs d'enregistrement personnels (104) à recevoir un flux du contenu audio en direct.

4. Agencement selon l'une quelconque des revendications 1 à 3, dans lequel les un ou plusieurs processeurs (112) sont en outre programmés pour numériser le contenu audio en direct reçu dans un flux audio numérique ; et
dans lequel la diffusion en continu de l'audio en direct à la pluralité de dispositifs d'enregistrement personnels (104) comprend de diffuser en continu le flux audio numérique à la pluralité de dispositifs d'enregistrement personnels (104).

5. Agencement selon l'une quelconque des revendications 1 à 4, dans lequel les liaisons de communication sans fil respectives sont configurées pour envoyer le flux audio en direct sur la norme 802.11.

6. Procédé de diffusion en continu d'un contenu audio en direct à partir d'un dispositif de diffusion audio (102) à une pluralité de dispositifs d'enregistrement personnels (104) lors d'un événement en direct, le procédé comprenant de :
établir (202) une connexion de réseau en utilisant des liaisons de communication sans fil respectives entre le dispositif de diffusion audio en continu (102) et la pluralité de dispositifs d'enregistrement personnels (104) ;
recevoir (204), par une carte son (110), l'audio en direct de l'événement à partir d'une pluralité de microphones (106) placés à divers endroits autour d'un lieu accueillant l'événement en direct ; et
ajuster l'audio en direct reçu à partir de la pluralité de microphones (106), recevoir, par le dispositif de diffusion audio en continu (108), l'audio en direct ajusté à partir de la carte son (110) ; et
diffuser en continu (206), par le dispositif de diffusion audio en continu (108), l'audio en direct ajusté de l'événement d'une manière sans fil à partir du dispositif de diffusion audio (102) à la pluralité de dispositifs d'enregistrement personnels (104).

7. Procédé selon la revendication 6 comprenant en outre de :
paquétiser l'audio en direct reçu dans une pluralité de paquets audio ; et
incorporer des données de synchronisation dans chacun de la pluralité de paquets audio.

8. Procédé selon la revendication 7, dans lequel l'incorporation de données de synchronisation dans chacun de la pluralité de paquets audio comprend l'horodatage de chacun de la pluralité de paquets audio.

9. Procédé selon l'une quelconque des revendications revendication 6 à 8, dans lequel l'établissement d'une connexion de réseau avec la pluralité de dispositifs d'enregistrement personnels (104) comprend de :
recevoir, à partir de la pluralité de dispositifs d'enregistrement personnels (104), des demandes respectives pour recevoir le contenu audio en direct ;
déterminer si la pluralité de dispositifs d'enregistrement personnels (104) sont chacun habilités à recevoir le contenu audio en direct ; et
autoriser la pluralité de dispositifs d'enregistrement personnels (104) à recevoir un flux du contenu audio en direct sur la base de la détermination.

10. Procédé selon l'une quelconque des revendications 6 à 9, dans lequel la réception, par le dispositif de diffusion audio en continu (102), de l'audio en direct ajusté de l'événement comprend de recevoir l'audio en direct ajusté de l'événement à partir de la pluralité de microphones (106) de sorte que la combinaison de l'audio en direct ajusté reçu à partir de chacun de la pluralité de microphones (106) fournit un son d'ambiance.

11. Procédé selon l'une quelconque des revendications 6 à 10, dans lequel la diffusion en continu de l'audio en direct ajusté de l'événement à partir du dispositif de diffusion audio en continu (102) à la pluralité de dispositifs d'enregistrement personnels (104) est dans la norme 802.11.

12. Procédé selon l'une quelconque des revendications 6 à 11, comprenant en outre d'envoyer un signal battement de cœur à partir du dispositif de diffusion audio en continu (102) à la pluralité de dispositifs d'enregistrement personnels (104) à des fins de synchronisation.
